# EUROPEAN PATENT SPECIFICATION

(11) **EP 2 690 832 B1**
(45) Date of publication and mention of the grant of the patent: **13.11.2019**
(21) Application number: 12764188.4
(22) Date of filing: 23.03.2012
(51) Int. Cl.: H04L 12/22, H04L 12/66, H04L 29/06, H04L 29/12, H04L 12/64, H04L 12/741

(54) **COMMUNICATION DEVICE, COMMUNICATION SYSTEM, AND COMMUNICATION METHOD**
KOMMUNIKATIONSVORRICHTUNG, KOMMUNIKATIONSSYSTEM UND KOMMUNIKATIONSVERFAHREN
DISPOSITIF DE COMMUNICATION, SYSTÈME DE COMMUNICATION ET PROCÉDÉ DE COMMUNICATION

(30) Priority: 25.03.2011 JP 2011067166
(43) Date of publication of application: 29.01.2014
(73) Proprietor: NEC Corporation, Tokyo 108-8001 (JP)
(72) Inventor: KITAMURA, Hiroshi, Tokyo 108-8001 (JP)
(74) Representative: Vossius & Partner Patentanwälte Rechtsanwälte mbB
(86) International application number: PCT/JP2012/002009
(87) International publication number: WO 2012/132356

(56) References cited:
- JP-A- 2003 069 605
- JP-A- 2004 040 806
- US-A1- 2002 194 378
- US-A1- 2004 093 430
- US-A1- 2008 005 264

## Description

### TECHNICAL FIELD

The present invention relates to an internet protocol (IP) communication technique.

### BACKGROUND ART

In networks employing IP, an IP address is set to each communication node, and each communication node is identified on the basis of the IP address. However, the communication node may have plural IP addresses set as a source address in a transmission packet thereof. For example, since unicast addresses in IPv6 are categorized into plural types depending on scopes, the communication node supporting IPv6 has plural IP addresses set as the source address. The method of selecting the source address in the communication node is described, for example, in Non-patent Document 1.

Further, there are methods of identifying a relaying node that is located in a path between a communication node serving as a starting point and a communication node serving as an ending point. One of these methods is a traceroute command. With this method, the starting node transmits probe packets each having a value of one called time-to-live (TTL) or hop-limit indicating the number of hops that each IP packet can reach is increased from one in increments of one. The starting node can acquire the IP address of each of the relaying nodes according to error responses (for example, time-exceeded of internet control message protocol (ICMP)) transmitted from each of the relaying nodes.

Although the communication node can be identified on the basis of the internet protocol (IP) address as described above, it is generally difficult for people to know detailed information concerning the communication node only from the IP address. The detailed information on the communication node includes, for example, location information and role information. In view of the facts above, Patent Document 1 describes a method in which a location-information notifying device generates an IPv6 address containing location information, and sets the generated IPv6 address to be the source address, so that the location information of this device can be notified to external devices.

Further, Non-patent Document 2 describes a reverse lookup of a domain name system (DNS) in which a fully qualified domain name (FQDN) is acquired from the IP address. The FQDN is a system in which a domain name is described by specifying the domain name, the subdomain name, the host name and the like without omitting them, which can provide more information to peoples as compared with those provided by the IP addresses. Hereinafter, the character string that provides information on each communication node and is described in a form of FQDN or other specified form is referred to as a domain name. The starting node in the example described above can acquire the domain name of each of the relaying nodes by performing the reverse DNS lookup using the IP address of each of the relaying nodes acquired through the error response packet.
Document US2002/0194378A1 discloses a system and method of hiding the source Internet Protocol (IP) address of an originating and/or terminating terminal during media flow by routing IP packets through an enhanced Media Resource Function that removes the source address and substitutes an alias address.

### RELATED DOCUMENT

### PATENT DOCUMENT

Patent Document 1: Japanese Patent Application Laid-open No. 2005-286811

### NON-PATENT DOCUMENT

Non-patent Document 1: R. Draves, "Default Address Selection for Internet Protocol version 6 (IPv6)," Feb 2003, RFC 3484 (http://www.ietf.org/rfc/rfc3484.txt)
Non-patent Document 2: P. Mockapetris, "Domain Names - Implementation and Specification," Nov 1987, STD 13, RFC 1035 (http://www.ietf.org/rfc/rfc1035.txt)

### SUMMARY OF THE INVENTION

As described above, in the IP communication, in general, the communication node transmits the packet having its own IP address set therein as the source address. With this configuration, the communication destination node uses, as a destination address of the return packet, the IP address set in the source address field of the received packet to deliver the return packet to the communication node.

In general, the source address set in the error response packet transmitted from each of the relaying nodes when the traceroute command described above is executed is not used as the destination address. This is because this error response packet is used only with the aim of notifying the starting node of predetermined information (IP address of the relaying device in the example described above), and does not request reply from the starting node.

Hereinbelow, unlike general packets intended for use in interactive communication, packets designed so as to be used in one-way communication such as this error response packet are referred to as special-purpose packets. The one-way communication means a communication in which the source address included in the packet is not used as the destination address in a series of communications thereafter by the communication node serving as the communication destination. Such a special-purpose packet is not limited to the error response packet of the ICMP described above, and is used in the other communications such as other ICMP packets and one-way user datagram protocol (UDP).

In the current situation, for such a special-purpose packet, the IP address of the communication node that transmits the special-purpose packet is set in the source address field of the packet. However, this means that each of the communication nodes makes their own IP addresses publicly available, which is not necessary, and in some case, this is not preferable in terms of security and confidential information protection. From the viewpoint of the security, this possibly leads to an opportunity for a malicious third party monitoring the special-purpose packet to identify the target of malicious attack.

As described above, the IP address set in the source address field of this special-purpose packet may be used in reverse DNS lookup. In this case, the IP address to be set as the source address needs to support entries for the database for reverse DNS lookup.

Further, in some cases, the IP address set in the source address field of the special-purpose packet by a relaying device such as the current router is not appropriate. Such a relaying device is designed mainly to perform a forwarding function, and in general, it is only necessary for the relaying device to have a private address (IPv4) or address of link-local scope (IPv6) set therein.

However, in the case where the starting node is located outside the scope of the relaying device serving as the transmission source of the special-purpose packet, there is a possibility that, for the starting node, the IP address set in the source address field of the special-purpose packet is an address outside the scope, and cannot be used to identify the relaying device. Further, currently, the method of selecting the IP address set in the source address of the time-exceeded packet of the ICMP, which is an example of the special-purpose packet, is a matter of design, and is not standardized.

As described above, in the current situation, it cannot be said that information set in the source address of the special-purpose packet as described above is appropriate.

An object of the present invention is to provide a technique of setting appropriate information in the source address of the packet.

Each mode of the present invention employs the following configurations to solve the problems described above.

A first aspect of the present invention relates to a communication device having an IP address set therein. The communication device according to the first aspect includes: a purpose determining unit that determines a communication purpose of a packet to be transmitted; a source address selection unit that, in the case where the communication purpose determined by the purpose determining unit is a predetermined purpose, selects, as a source address, a formal node identification address provided separately from the set IP address in order to identify the communication device, the formal node identification address having a property such that there exists no communication device that receives, through the formal node identification address, a packet having the formal node identification address set therein as a destination address; and a transmitting unit that transmits a packet having the formal node identification address selected by the source address selection unit set therein as the source address.

A second aspect of the present invention relates to a communication system including plural communication devices each having an IP address set therein. In the communication system according to the second aspect, one of the plural communication devices is a target communication device including: a receiving unit that receives a trigger packet transmitted from a start-point communication device of the plural communication devices; a purpose determining unit that determines a communication purpose of a return packet to be transmitted in response to the trigger packet received by the receiving unit; a source address selection unit that, in the case where the communication purpose determined by the purpose determining unit is a predetermined purpose, selects, as a source address, a formal node identification address provided separately from the IP address set to the target communication device in order to identify the target communication device, the formal node identification address having a property such that there exists no communication device that receives, through the formal node identification address, a packet having the formal node identification address set therein as a destination address; a transmitting unit that transmits, to the start-point communication device, the return packet in which the formal node identification address selected by the source address selection unit is set in a source address field. Further, in the communication system according to the second aspect, the start-point communication device includes: a transmitting unit that transmits the trigger packet; a receiving unit that receives the return packet transmitted from the target communication device in response to the trigger packet; and a node-description-data acquiring unit that acquires node description data corresponding to the formal node identification address contained in the return packet received by the receiving unit of the start-point communication device, from a storage unit that stores node description data not having a name resolving function and serving as a description character string of the target communication device or serving as information on link to a description of the target communication device.

It should be noted that another aspect of the present invention may provide a communication method for performing each of the processes in the first aspect or second aspect described above, or may provide a program that causes a computer to function as each of the units of the first aspect or second aspect, or may provide a computer-readable storage medium that stores such a program. This storage medium includes a non-transitory tangible media.

According to each of the aspects described above, it is possible to provide a technique of setting appropriate information to a source address of a packet.

The invention is carried out according to the appended independent claims. Optional features of the invention are carried out according to the dependent claims. However, technical descriptions of apparatus, products and/or methods in the description and/or drawings which are not covered by the claims are presented not as embodiments of the invention but as background art or examples useful for understanding the invention.

### BRIEF DESCRIPTION OF THE DRAWINGS

FIG. 1 is a schematic view illustrating an example of a process configuration of a target communication device according to a first exemplary embodiment.
FIG. 2 is a diagram illustrating an example of a configuration performed by a communication system according to a second exemplary embodiment.
FIG. 3 is a schematic view illustrating an example of a process configuration of a target communication device according to the second exemplary embodiment.
FIG. 4 is a schematic view illustrating an example of a process configuration of a DNS server according to the second exemplary embodiment.
FIG. 5 is a schematic view illustrating an example of a process configuration of a start-point communication device according to the second exemplary embodiment.
FIG. 6 is a sequence chart showing an example of an operation performed by a communication system according to the second exemplary embodiment.
FIG. 7 is a schematic view illustrating an operation of a traceroute.
FIG. 8 is a diagram illustrating an example of a configuration of a communication system according to a third exemplary embodiment.
FIG. 9 is a schematic view illustrating an example of a process configuration of an identification address server according to the third exemplary embodiment.
FIG. 10 is a sequence chart showing an example of an operation performed by the communication system according to the third exemplary embodiment.
FIG. 11 is a schematic view illustrating an example of a process configuration of a start-point communication device according to a modification example.
FIG. 12 is a diagram illustrating specific examples of a formal node identification address and node description data, and specific examples of database for reverse DNS lookup or a node description data storage unit.
FIG. 13 is a diagram illustrating specific examples of a formal node identification address and node description data, and a specific example of database for reverse DNS lookup or node description data storage unit.

### DESCRIPTION OF EMBODIMENTS

Hereinbelow, a communication device according to exemplary embodiments of the present invention will be described with reference to the drawings. Note that, in all the drawing, the same constituent components are denoted as the same reference numerals, and detailed explanation thereof will not be repeated. Further, the exemplary embodiments described below are merely examples, and the present invention is not limited to the configurations of each of the exemplary embodiments described below. In each of the exemplary embodiments described below, for the purpose of explanation, descriptions will be made by distinguishing a communication device (start-point communication device) starting a certain communication and a communication device (target communication device) serving as a communication target of the communication. The communication device in the exemplary embodiments has any one of or both a configuration of a target communication device described later and a configuration of the start-point communication device.

### [First Exemplary Embodiment]

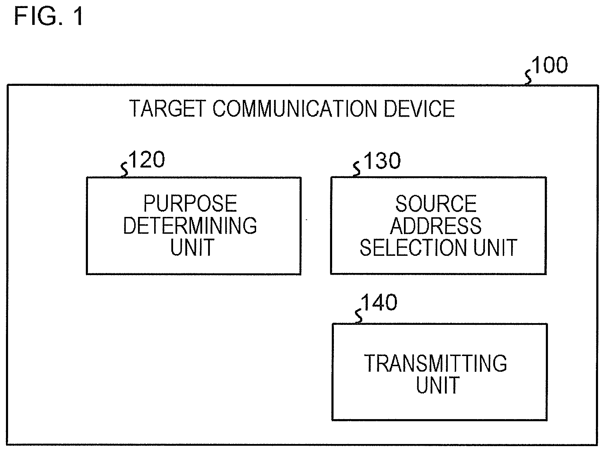

FIG. 1 is a schematic view illustrating an example of a process configuration of a target communication device 100 according to a first exemplary embodiment. As illustrated in FIG. 1, the target communication device 100 includes, for example, a purpose determining unit 120, a source address selection unit 130, and a transmitting unit 140. In the target communication device 100, each of these processing units is realized, for example, as a hardware circuit such as an IC chip. The target communication device 100 further includes, for example, a central processing unit (CPU), a memory, and an input-output interface, and may has a configuration in which each of the processing units described above is realized, for example, with the CPU running a program stored in a memory. This exemplary embodiment does not limit the hardware configuration of the target communication device 100.

The purpose determining unit 120 determines a communication purpose of a packet to be transmitted. The determination of the communication purpose is made such that, when the packet is transmitted, determination is made as to how a communication device on the receiver side treats the packet. For example, in the case where the communication purpose of the packet is only to notify a communication destination of predetermined information, it can be known that, in the series of communications thereafter, the communication device serving as the communication destination does not use, as the destination address, the source address included in the packet.

On the other hand, in the case where the packet is designed to expect that, in response to the packet, a reply packet is transmitted from the communication destination, it can be known that the communication device serving as the communication destination uses, as the destination address, the source address included in the packet in the series of communications thereafter. The purpose determining unit 120 may determine whether the communication purpose of the packet to be transmitted is based on the general interactive communication or on the one-way communication, or may determine the purpose in a more detailed manner.

In the case where the packet is transmitted upon receiving the packet from another communication device, the purpose determining unit 120 may makes the determination on the basis of any one of data items contained in the received packet, or a combination of two or more data items contained in the received packet. For example, in the case where the target communication device 100 receives a probe packet corresponding to the traceroute command from another communication device, it is determined to transmit the ICMP time exceeded packet to the other communication destination on the basis of the TTL value of the received probe packet or other information, and determines the communication purpose of the ICMP packet.

Further, in the case where the packet is voluntarily transmitted, the purpose determining unit 120 may make the determination on the basis of a request from another processing unit, which is not-illustrated. For example, in the case where a request to make one-way notification of predetermined information to another communication device is made from the other process unit that is not illustrated, the purpose determining unit 120 determines, in response to the request, that the communication purpose is the one-way notification.

In the case where the communication purpose is determined by the purpose determining unit 120 to be a predetermined purpose, the source address selection unit 130 selects a formal node identification address as the source address. This predetermined purpose is the above-described special purpose to be used in the one-way communication. For example, this predetermined purpose (special purpose) is a communication purpose determined in the case where the packet to be transmitted is the ICMP packet in the one-way communication or the UDP packet in the one-way communication.

The formal node identification address selected above is provided separately from the IP address set in the target communication device 100, and serves as identification information for identifying the target communication device 100 itself. Further, the formal node identification address represents data that if a packet has this formal node identification address set therein as a destination address is transmitted, there exists no communication device that receives this packet on the basis of this formal node identification address. In other words, although the formal node identification address is the same as the IP address in terms of the size of the data or other format aspects, it does not have certain functions that an ordinary IP address is supposed to have. The certain functions that the ordinary IP address is supposed to have are, for example, a function of being set in the communication node to achieve the IP communication, or a function of being set as the destination address of the packet to be transmitted to the communication node so as to make the communication node correctly receive the packet.

Thus, it may be possible for the target communication device 100 not to retain this formal node identification address in advance in the target communication device 100 itself. Even if the target communication device 100 does not retain the formal node identification address, the target communication device 100 can achieve the IP communication. Further, the packet having this formal node identification address set therein as the destination address is not received correctly by any communication devices. However, this exemplary embodiment does not prevent this formal node identification address from being set as the destination address of the packet.

Further, as in the conventional technique, the source address selection unit 130 selects, as the source address, an IP address set to the target communication device 100 itself, provided that the communication purpose determined by the purpose determining unit 120 is other than the predetermined purpose.

The transmitting unit 140 transmits the packet having the formal node identification address selected by the source address selection unit 130 set therein as the source address.

### [Operation and Effect of First Exemplary Embodiment]

As described above, in the first exemplary embodiment, in order to identify how the transmitted packet is treated in the communication device on the receiver side, the communication purpose of the packet is determined before the packet is transmitted. Then, in accordance with the communication purpose determined as described above, the source address of the packet to be transmitted is appropriately selected and set.

More specifically, in the case where the communication purpose of the packet to be transmitted is the predetermined purpose (special purpose), the transmission packet having the formal node identification address for identifying the target communication device 100 set therein as the source address is transmitted. In other words, in accordance with the communication purpose of the transmission packet, data set in the source address of the transmission packet are switched between the IP address and the formal node identification address.

Thus, according to the first exemplary embodiment, it is possible to make the transmission packet contain information that can be used for identifying the target communication device 100 while preventing its own IP address from being unnecessarily publicly disclosed. Even if the third party acquires the formal node identification address from this packet and transmits malicious packets having the formal node identification address set as the destination address, any communication devices do not receive damages from the malicious packets. Thus, according to the first exemplary embodiment, by setting appropriate information to the source address of the packet having the predetermined communication purpose, it is possible to prevent the IP address of the communication device from being unnecessarily publicly disclosed while strengthening security.

Further, even if the formal node identification address is set as the source address, this setting does not cause any troubles in the device on the receiver side. Because the setting is determined in advance with consideration for the communication purpose of the packet, in other words, the manner that the packet.

### [Second Exemplary Embodiment]

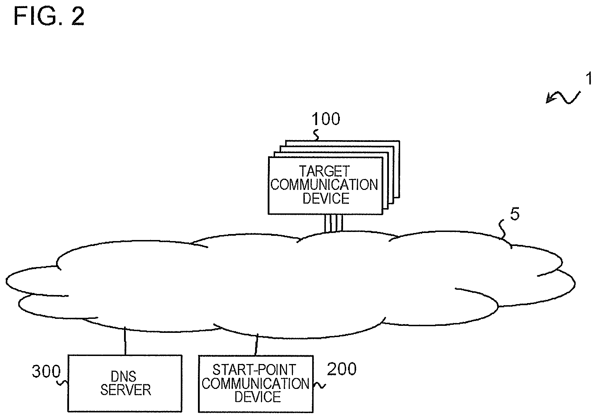

FIG. 2 is a diagram illustrating an example of a configuration of a communication system according to a second exemplary embodiment. The communication system 1 according to the second exemplary embodiment includes, for example, a target communication device 100, a start-point communication device 200, a DNS server 300, and a network 5 for connecting the devices in a manner that they can communicate with each other. The network 5 includes a public network such as the Internet, a wide area network (WAN), a local area network (LAN), and a wireless communication network. IP are used for communication between communication devices, and hence, IP addresses are set to the communication devices. Note that, in this exemplary embodiment, versions of IP are not limited. Below, each of the devices constituting the communication system 1 will be described with focus being placed on things different from those in the first exemplary embodiment.

### [Target Communication Device]

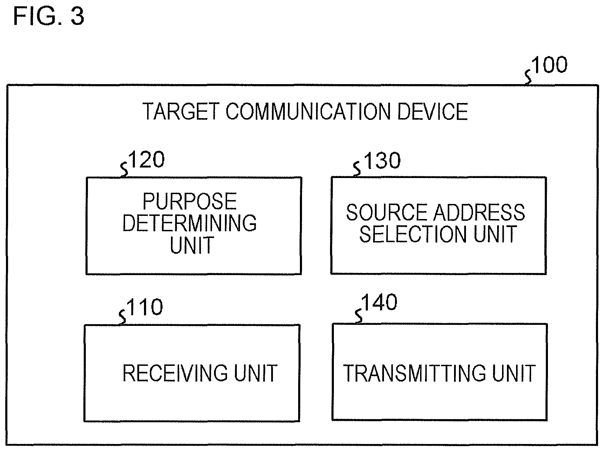

FIG. 3 is a schematic view illustrating an example of a process configuration of a target communication device 100 according to the second exemplary embodiment. As illustrated in FIG. 3, in addition to the configuration in the first exemplary embodiment, the target communication device 100 according to the second exemplary embodiment further includes a receiving unit 110.

The receiving unit 110 receives a trigger packet transmitted from the start-point communication device 200. The trigger packet represents, for example, a probe packet transmitted from the start-point communication device 200 at the time of executing a traceroute command, an ICMP echo request packet transmitted from the start-point communication device 200 at the time of executing a ping command, and a UDP packet. Note that this exemplary embodiment does not limit formation of this trigger packet.

The purpose determining unit 120 determines the communication purpose of a return packet to be transmitted in response to the received trigger packet.

The source address selection unit 130 retains in advance a formal node identification address for identifying the target communication device 100 itself. In the case where the communication purpose determined by the purpose determining unit 120 is the predetermined purpose, the source address selection unit 130 selects the formal node identification address retained in advance as the source address. This predetermined purpose indicates, for example, the special purpose described above, and also indicates that the start-point communication device 200 receiving a return packet uses data set in the source address field of the return packet to perform reverse DNS lookup. It may be possible that, if the communication purpose is the special purpose, it is automatically determined that the data are used for the reverse DNS lookup.

The source address selection unit 130 selects, as the source address, the formal node identification address that can be a parameter of the reverse DNS lookup in anticipation of the selected source address being used as the parameter of the reverse DNS lookup.

The transmitting unit 140 transmits a return packet having an IP address of the start-point communication device 200 set as the destination address and having the formal node identification address selected by the source address selection unit 130 set as the source address.

### [DNS server]

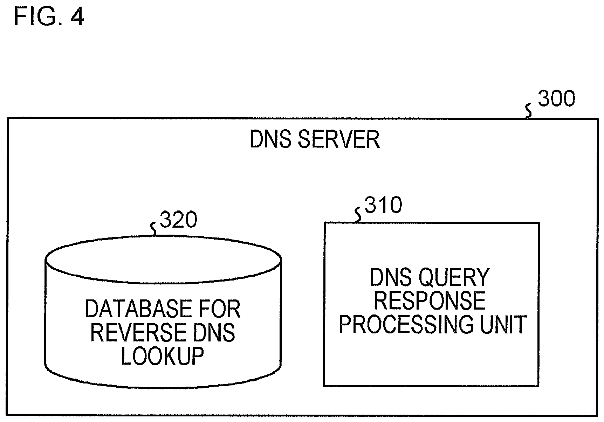

FIG. 4 is a schematic view illustrating an example of a process configuration of the DNS server 300 according to the second exemplary embodiment. As illustrated in FIG. 4, the DNS server 300 includes, for example, a DNS query response processing unit 310, and a database 320 for reverse DNS lookup. The DNS server 300 includes, for example, a CPU, a memory, and an input-output interface, and each of the processing units described above is realized, for example, with the CPU running a program stored in a memory. However, this exemplary embodiment does not limit the hardware configuration of the DNS server 300.

The DNS query response processing unit 310 receives a DNS query packet transmitted from a communication device. The DNS query response processing unit 310 extracts, from the database 320 for reverse DNS lookup, node description data corresponding to a formal node identification address of a query target contained in this DNS query packet. The DNS query response processing unit 310 transmits the extracted node description data to a transmission source of the DNS query packet.

It should be noted that the data extracted from the database 320 for reverse DNS lookup may be FQDN (domain name) corresponding to the formal node identification address. Further, the query target contained in the DNS query packet may be an IP address. The DNS query response processing unit 310 may be configured to perform processing without identifying the data extracted from the query target or the database 320 for reverse DNS lookup, or may be configured to perform processing by identifying them. The node description data will be described later.

The database 320 for reverse DNS lookup stores an entry in which the formal node identification address of the target communication device 100 and the node description data of the target communication device 100 are associated with each other.

Here, the node description data represents a character string specifying a communication device, or information on link to explanation data on the communication device, and is data that do not have the name resolving function. The data that do not have the name resolving function means that any IP address corresponding to the data cannot be acquired from the data.

The character string specifying the communication device may be formed by using node description used in conventional other functions. For example, it may be possible to use details defined in a system subtree of a management information base (MIB) of a simple network management protocol (SNMP), or output details of a command (uname -a) in UNIX (registered trademark).

The node description data may, or may not meet requirements specified with FQDN. It is desirable that the node description data or the explanation data on the communication device contain a character string from which a user such as a manager can know details concerning what kind of node this communication device is, which are details that the general domain name cannot provide.

Further, in addition to the entry containing the node description data, the database 320 for reverse DNS lookup further stores an entry in which the IP address and the domain name are associated with each other, or an entry in which the formal node identification address and the domain name are associated with each other.

### [Start-point Communication Device]

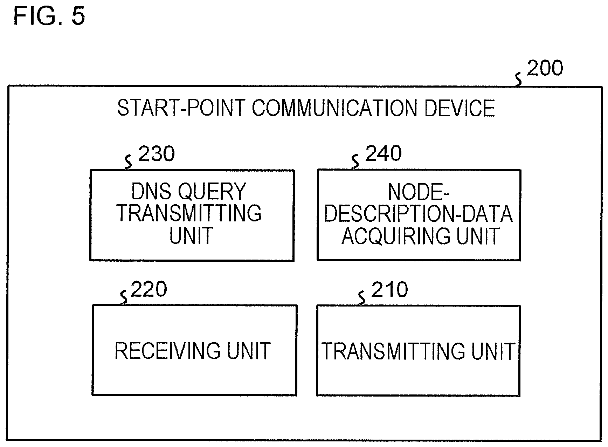

FIG. 5 is a schematic view illustrating an example of a process configuration of the start-point communication device 200 according to the second exemplary embodiment. As illustrated in FIG. 5, the start-point communication device 200 includes, for example, a transmitting unit 210, a receiving unit 220, a DNS query transmitting unit 230, and a node-description-data acquiring unit 240.

In the start-point communication device 200, each of the processing units is realized, for example, as a hardware circuit such as an IC chip. Further, it may be possible that the start-point communication device 200 includes, for example, a CPU, a memory, and an input-output interface, and each of the processing units described above is realized, for example, with the CPU running a program stored in the memory. This exemplary embodiment does not limit the hardware configuration of the start-point communication device 200.

The transmitting unit 210 transmits a trigger packet directed to the target communication device 100. Note that an IP address set in the start-point communication device 200 is set as the source address of this trigger packet.

The receiving unit 220 receives a return packet transmitted from the target communication device 100 to the trigger packet. In the source address field of this return packet, the formal node identification address is set.

The DNS query transmitting unit 230 transmits, to the DNS server 300, a DNS query packet whose query target is set to the formal node identification address contained in the return packet. In the case where an IP address is set to the source address of the above-described return packet, the DNS query transmitting unit 230 may set the IP address to the query target.

The node-description-data acquiring unit 240 receives a DNS query response packet transmitted from the DNS server 300, and acquires node description data indicating query results from this packet. The node-description-data acquiring unit 240 may acquire a domain name in accordance with the query results. The node-description-data acquiring unit 240 outputs the acquired node description data for the user such as a manager. This output may be performed, for example, by displaying to a display device not illustrated, or may be performed by giving a printing instruction to a printing device not illustrated, or may be performed by transmitting a mail.

### [Example of Operation]

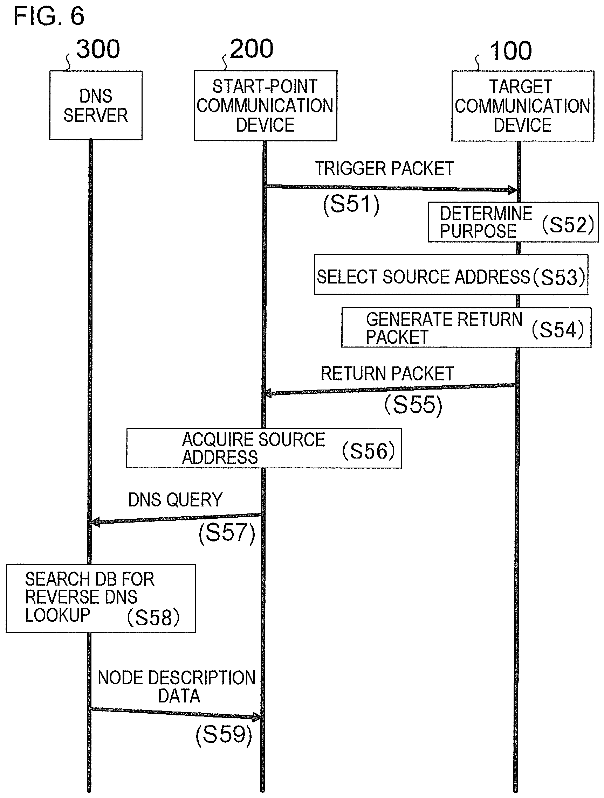

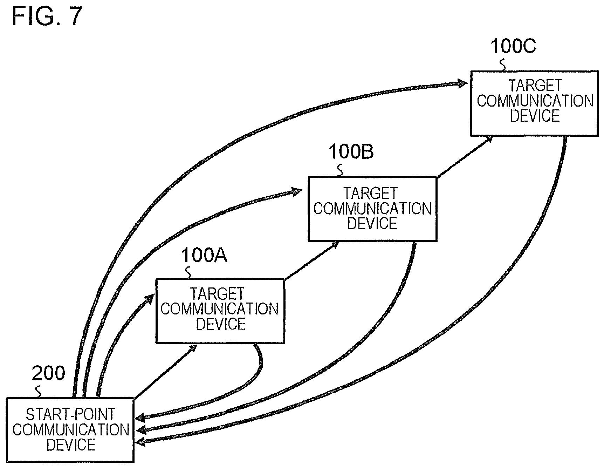

Below, with reference to FIG. 6 and FIG. 7, a description will be made of an example of an operation performed by the communication system 1 according to the second exemplary embodiment by giving an example in which the start-point communication device 200 executes a traceroute command with a certain end-point communication device being a destination. FIG. 6 is a sequence chart showing an example of an operation performed by the communication system 1 according to the second exemplary embodiment. FIG. 7 is a schematic view illustrating an operation of traceroute. In the following description, a target communication device 100A illustrated in FIG. 7 is set as the target communication device 100 according to the second exemplary embodiment. Note that, in this example of operation, an operation at the time of executing a traceroute command is described as an example. However, an operation at the time of executing a ping command or an operation at the time of transmitting a one-way UDP packet from the target communication device 100 may be applicable.

Once the traceroute command is executed, the transmitting unit 210 of the start-point communication device 200 transmits a trigger packet having the number of hops (TTL value in this section) that the IP packet can reach set to "1" (S51). In the source address field of this trigger packet, the IP address of the start-point communication device 200 is set, and in the destination address field, the IP address of a certain end-point communication device is set.

In the target communication device 100, the receiving unit 110 receives the trigger packet, and checks the TTL value contained in the trigger packet. Since the TTL value is "1," the receiving unit 110 determines to transmit an error response packet. Once it is determined to transmit the error response packet, the purpose determining unit 120 determines the communication purpose of the error response packet (S52). In this example, the communication purpose is determined to be the special purpose described above, and the determination result is transmitted to the source address selection unit 130.

Since the communication purpose of the error response packet is the predetermined communication purpose (special purpose), the source address selection unit 130 selects a formal node identification address for identifying the target communication device 100 itself for the source address (S53).

The transmitting unit 140 generates a return packet having the formal node identification address selected by the source address selection unit 130 for the source address set therein, and having the IP address of the start-point communication device 200 set therein as the destination address (S54), and transmits the generated return packet (S55).

The receiving unit 220 of the start-point communication device 200 receives this return packet, and acquires the formal node identification address from the source address field of the received return packet (S56). This formal node identification address is transmitted to the DNS query transmitting unit 230.

The DNS query transmitting unit 230 transmits, to the DNS server 300, a DNS query packet having the formal node identification address set as the query target (S57).

The DNS query response processing unit 310 of the DNS server 300 receives the DNS query packet, and identifies the address of the query target on the basis of the DNS query packet. The DNS query response processing unit 310 searches the database 320 for reverse DNS lookup using the identified address of the query target (S58). The address of the query target identified in this example is the formal node identification address.

The DNS query response processing unit 310 extracts, as the searching results, a domain name corresponding to the address of the identified query target or node description data. In this example, the database 320 for reverse DNS lookup contains an entry in which the formal node identification address and the node description data concerning the target communication device 100 are associated with each other. Thus, the DNS query response processing unit 310 extracts the node description data corresponding to the formal node identification address of the query target from the database 320 for reverse DNS lookup.

The DNS query response processing unit 310 transmits the extracted node description data to the start-point communication device 200 (S59). As a result, this node description data is outputted in a form that a user such as a manager can know, whereby the user can recognize that the target communication device 100 (100A) is contained in the middle of the pathway of the packet directed to a certain end-point communication device, and at the same time, the user can readily know details of information on the target communication device 100A.

Hereinafter, the transmitting unit 210 of the start-point communication device 200 sequentially transmits trigger packets having the TTL values sequentially increased in increments of one. With these operations, the trigger packet next transmitted from the start-point communication device 200 passes through the target communication device 100A, and then, is returned by the target communication device 100B as the error response packet. Further, the following trigger packet passes through the target communication devices 100A and 100B, and then, is returned by the target communication device 100C as the error response packet.

### [Operation and Effect of Second Exemplary Embodiment]

As described above, in the second exemplary embodiment, in response to the trigger packet transmitted from the start-point communication device 200, the return packet having the formal node identification address for identifying the target communication device 100 set therein as the source address is returned to the start-point communication device 200. Thus, as with the first exemplary embodiment, with the second exemplary embodiment, it is possible to prevent the IP address of the communication device from being made unnecessarily publicly available, and strengthen security by setting appropriate information to the source address of the packet having the predetermined communication purpose.

Further, the second exemplary embodiment considers in advance that the communication purpose of the return packet is to use the source address as a parameter of the reverse DNS lookup, whereby the formal node identification address that can be the parameter of the reverse DNS lookup is selected as the source address of the return packet. Thus, the database 320 for reverse DNS lookup in the DNS server 300 is searched using this formal node identification address, whereby the node description data corresponding to this formal node identification address is acquired. The node description data is a character string specifying the target communication device 100 or information on link to the character string. Thus, according to the second exemplary embodiment, it is possible to acquire detailed information on the target communication device 100 in a manner that the user such as a manager can readily understand.

As described above, according to the second exemplary embodiment, it is possible to prevent unnecessary disclosure of the IP address while performing the reverse DNS lookup using the source address. Further, since node description data do not have the name resolving function, if the node description data is used as data corresponding to the formal node identification address, it is possible to prevent the IP address from being acquired on the basis of the data. In other words, it is possible to prevent direct disclosure of the IP address while preventing indirect disclosure of the IP address.

These configurations create new functions while using the currently widely available IP communications, which means creating new functions in the relating fields that employ the IP communications. For example, at the time of recording logs of the IP communications, the IP address or corresponding domain name is recorded as the logs in the conventional technique. However, with these configurations described above, it is possible to record further detailed information on the node as the logs.

### [Supplemental Note for Second Exemplary Embodiment]

In the above-described second exemplary embodiment, the configurations employing the currently available DNS techniques such as the DNS server 300, the database 320 for reverse DNS lookup, and the reverse DNS lookup have been described. However, the present invention is not limited to the techniques based on these DNS techniques. The database 320 for reverse DNS lookup may be a database only having an entry in which the formal node identification addresses for identifying each of the communication devices and the node description data on each of the communication devices are associated with each other. The DNS server 300 may be a server device having such a database and transmitting the node description data extracted from the database.

### [Third Exemplary Embodiment]

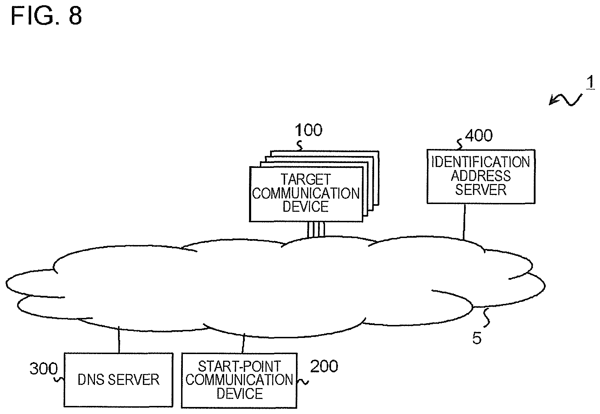

FIG. 8 is a diagram illustrating an example of a configuration of a communication system according to a third exemplary embodiment. In addition to the configuration of the second exemplary embodiment, the communication system 1 according to the third exemplary embodiment further includes an identification address server 400. It is only necessary that the identification address server 400 is connected to the target communication device 100 in a manner that they can communicate with each other. This exemplary embodiment does not limit the communication form between the identification address server 400 and the target communication device 100.

In the third exemplary embodiment, the target communication device 100 acquires, from the identification address server 400, a formal node identification address for identifying the target communication device 100 itself. Below, each device constituting the communication system 1 will be described with focus being placed on things different from the second exemplary embodiment.

### [Target Communication Device]

In the third exemplary embodiment, in the case where the communication purpose determined by the purpose determining unit 120 is a predetermined purpose, the source address selection unit 130 acquires the formal node identification address of the target communication device 100 itself from the identification address server 400, and selects the acquired formal node identification address as the source address. In order to acquire the formal node identification address, the source address selection unit 130 transmits a request containing information from which the target communication device 100 itself can be identified (hereinafter, referred to as a device identification information) to the identification address server 400.

For this device identification information, any information can be used, provided that the identification address server 400 can identify the target communication device 100 with this information, and for example, an IP address of the target communication device 100 is used.

### [Identification Address Server]

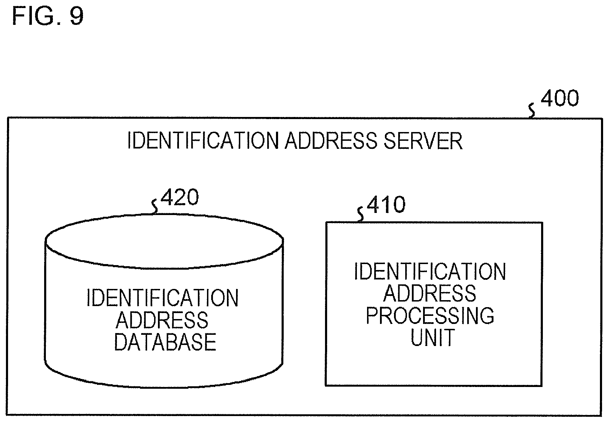

FIG. 9 is a schematic view illustrating an example of a process configuration of the identification address server 400 according to the third exemplary embodiment. As illustrated in FIG. 9, the identification address server 400 includes, for example, an identification address processing unit 410, and an identification address database 420. The identification address server 400 further includes, for example, a CPU, a memory, and an input-output interface, and each of the processing units described above is realized, for example, with the CPU running a program stored in the memory. However, this exemplary embodiment does not limit the hardware configuration of the identification address server 400.

In response to a request transmitted from the target communication device 100, the identification address processing unit 410 searches the identification address database 420 using device identification information on the target communication device 100, which is contained in the request. The identification address processing unit 410 extracts a formal node identification address for identifying the target communication device 100 from the identification address database 420. The identification address processing unit 410 returns the extracted formal node identification address to the target communication device 100.

The identification address database 420 stores an entry in which the formal node identification address for identifying each of the communication devices and the device identification information on each of the communication devices are associated with each other.

### [Example of Operation]

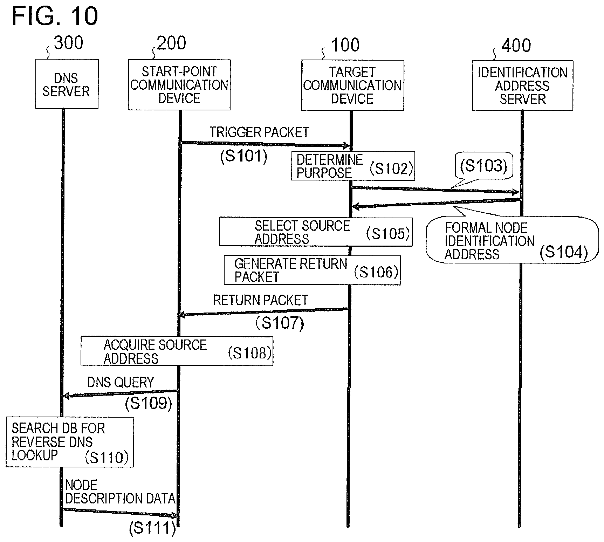

FIG. 10 is a sequence chart showing an example of an operation performed by the communication system 1 according to the third exemplary embodiment. The operation performed by the communication system 1 according to the third exemplary embodiment is similar to that in the example of the operation performed in the first exemplary embodiment illustrated in FIG. 6 until the purpose determining unit 120 of the target communication device 100 determines the communication purpose of the return packet. In other words, S51 is the same as S101, and S52 is the same as S102.

Upon recognizing that the communication purpose of the error response packet is a predetermined communication purpose (special purpose), the source address selection unit 130 transmits a request containing the device identification information on the target communication device 100 to the identification address server 400 (S103).

Upon receiving the request, the identification address processing unit 410 of the identification address server 400 extracts, from the identification address database 420, the formal node identification address corresponding to the device identification device contained in the received request. The extracted formal node identification address is used for identifying the target communication device 100. The identification address processing unit 410 transmits the extracted formal node identification address to the target communication device 100 (S104).

The source address selection unit 130 of the target communication device 100 receives the formal node identification address from the identification address server 400, and selects the formal node identification address as the source address (S105). Thereafter, the operations from S106 to S111 are similar to those from S54 to S59 in the second exemplary embodiment.

### [Operation and Effect of Third Exemplary Embodiment]

As described above, in the third exemplary embodiment, the formal node identification address of the target communication device 100 is extracted from the identification address database 420 of the identification address server 400, and is acquired by the target communication device 100. Thus, it is not necessary for the target communication device 100 to retain in advance its formal node identification address. This means that the formal node identification address has a characteristic different from the IP address.

According to the third exemplary embodiment, it is possible to integrally manage the formal node identification addresses of plural target communication devices 100 with the identification address server 400.

### [Modification Example]

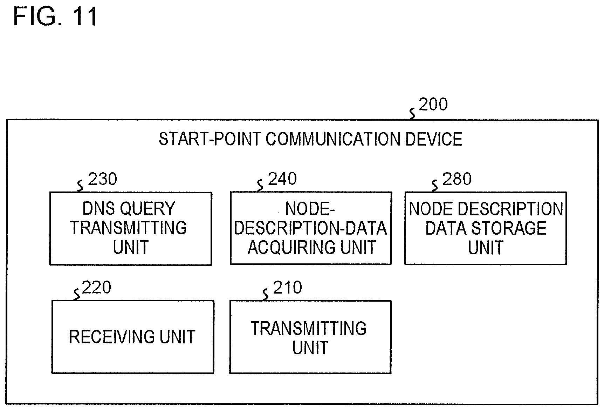

In the above-described communication system 1 according to the second exemplary embodiment and the third exemplary embodiment, the DNS server 300 is provided separately from the start-point communication device 200. However, the database 320 for reverse DNS lookup may be provided to the start-point communication device 200. FIG. 11 is a schematic view illustrating an example of a process configuration of the start-point communication device 200 according to a modification example.

In this modification example, in addition to the configurations of the second exemplary embodiment and the third exemplary embodiment, the start-point communication device 200 is configured to further include a node description data storage unit 280. The node description data storage unit 280 stores an entry in which the formal node identification address of the target communication device 100 and the node description data of the target communication device 100 are associated with each other. In this case, the node-description-data acquiring unit 240 extracts the node description data corresponding to the formal node identification address from the node description data storage unit 280.

### [Example]

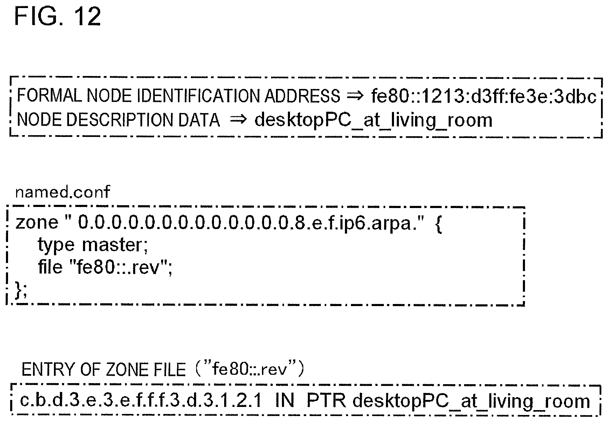

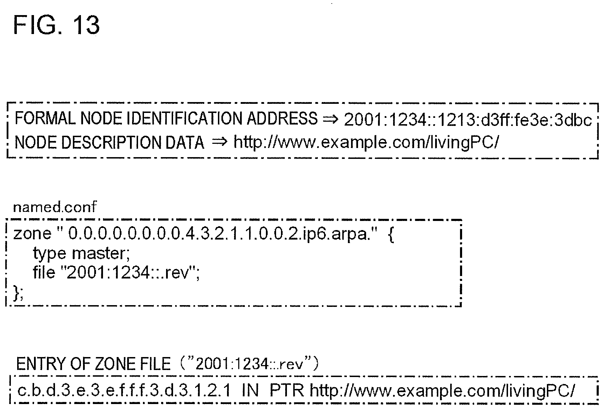

FIG. 12 and FIG. 13 are diagrams illustrating a specific example of the formal node identification address and the node description data, and a specific example of the database 320 for reverse DNS lookup and the node description data storage unit 280.

As described above, the formal node identification address has the format same as that of the IP address only in terms of the size of the data or other format aspects, and two examples thereof are illustrated in FIG. 12 and FIG. 13, each of which does not have any specific limitation. Further, for the node description data, two examples are illustrated in FIG. 12 and FIG. 13, each of which does not have any specific limitation.

For the node description data in the example illustrated in FIG. 12, the character string "desktopPC_at_living_room" is set as a character string describing a communication device. A user who obtains this node description data can readily understand that the communication device is a desktop personal computer placed at a living room.

For the node description data in the example illustrated in FIG. 13, the URL "http://www.example.com/livingPC/" is set as a location at which the explanation data describing a communication device is placed. With this node description data, it is possible to obtain the explanation data describing the communication device from this URL, whereby it is possible to know the detailed information on the communication device on the basis of the obtained explanation data.

In the case where the formal node identification address as illustrated in the example in FIG. 12 is used, the database 320 for reverse DNS lookup or the node description data storage unit 280 stores a setting file (named.conf) and an entry of a zone file (fe80::.rev) as illustrated FIG. 12. Further, the database 320 for reverse DNS lookup or the node description data storage unit 280 in FIG. 13 stores a setting file (named.conf) and an entry of a zone file (2001:1234::.rev) as illustrated in FIG. 13. Note that each of the exemplary embodiments described above is not limited to the zone definition as described above.

Further, as for another example of the node description data, it may be possible to set the node description data to a character string "Linux mercury 2.6.24-28-generic #1 SMP Thu Sep 16 15:01:14 UTC 2010 i686 GNU/Linux" in the case where the node description used in another existing function is used.

The present application claims priority based on Japanese Patent Application No. 2011-067166 filed in Japan on March 25, 2011.

## Claims

1. A communication device (100) having an internet protocol, IP, address set therein, comprising:
a purpose determining unit (120) that determines whether a packet to be transmitted is a packet for general interactive communication or a packet for one-way communication;
a source address selection unit (130) that, in a case where the purpose determining unit determines the packet to be transmitted is a packet for one-way communication, selects, as a source address, a formal node identification address provided separately from the IP address in order to identify the communication device, the formal node identification address not having a function of being set in the communication device to achieve an IP communication or a function of being set as a destination address of the packet to be transmitted to the communication device so as to make the communication device correctly receive the packet; and
a transmitting unit (140) that transmits a packet having the formal node identification address selected by the source address selection unit set therein as the source address.

2. The communication device according to claim 1, wherein
the formal node identification address is stored in another device different from the communication device, and
the source address selection unit acquires the formal node identification address from said another device.

3. A communication system including a plurality of communication devices (100, 200, 300) each having an internet protocol, IP, address set therein, the plurality of communication devices including the communication device according to claim 1 or 2 as a target communication device (100), the target communication device (300) further comprising:
a receiving unit (110) that receives a trigger packet (S51) transmitted from a start-point communication device (200) of the plurality of communication devices; wherein the purpose determining unit (120) determines whether a return packet is transmitted in response to the trigger packet received by the receiving unit;
in a case where the purpose determining unit (120) determines the packet to be transmitted is a packet for one-way communication, the source address selection unit selects, as the source address, the formal node identification address provided separately from an IP address set in the target communication device in order to identify the target communication device; and
the transmitting unit transmits (S55), to the start-point communication device, the return packet in which the formal node identification address selected by the source address selection unit is set in a source address field, and
the start-point communication device comprising:
a transmitting unit (210) that transmits the trigger packet;
a receiving unit (220) that receives the return packet transmitted from the target communication device in response to the trigger packet; and
a node-description-data acquiring unit (240) that acquires node description data corresponding to the formal node identification address contained in the return packet received by the receiving unit of the start-point communication device, from a storage unit that stores node description data not having a name resolving function and serving as a description character string of the target communication device or serving as information on link to a description of the target communication device.

4. The communication system according to claim 3, wherein
in the case where the purpose determining unit determines the packet to be transmitted is a packet for one-way communication, the source address selection unit acquires the formal node identification address from another device other than the target communication device, and selects the acquired formal node identification address as the source address.

5. The communication system according to claim 3, wherein
the storage unit is provided in the start-point communication device, or another device other than the start-point communication device.

6. The communication device according to claim 1 or 2, wherein
the source address selection unit switches the source address to select between the IP address set in the communication device and the formal node identification address based on whether the purpose determining unit determines the packet to be transmitted is a packet for one-way communication, or not.

7. The communication device according to claim 1, 2 or 6, wherein
the purpose determining unit determines whether the packet to be transmitted is only to notify a communication destination of predetermined information and determines whether or not the source address included in the packet is not used as a destination address in the series of communications thereafter by a communication device serving as the communication destination.

8. A communication method performed by a communication device having an internet protocol, IP, address set therein, the method including the following steps:
a) determining (S52) whether a packet to be transmitted is a packet for general interactive communication or a packet for one-way communication;
b) in a case where in step a) the determined packet to be transmitted is a packet for one-way communication, selecting (S53), as a source address, a formal node identification address provided separately from the IP address in order to identify the communication device, the formal node identification address not having a function of being set in the communication device to achieve an IP communication or a function of being set as a destination address of the packet to be transmitted to the communication device so as to make the communication device correctly receive the packet; and
c) transmitting (S55) a packet having the selected formal node identification address set as the source address.

9. A communication method performed by a plurality of communication devices each having an internet protocol, IP, address set therein, one of the plurality of communication devices being a target communication device, the communication method including steps a), b) and c) of claim 8 performed by the target communication device, the communication method further comprising the following steps:
d) receiving, at the target communication device, a trigger packet transmitted from a start-point communication device of the plurality of communication devices, wherein
e) step a) determines whether a return packet is transmitted in response to the received trigger packet;
f) in a case where the determined packet to be transmitted is a packet for one-way communication, step b) selects, as a source address, the formal node identification address provided separately from an IP address set in the target communication device in order to identify the target communication device; and
g) step c) transmits, to the start-point communication device, the return packet having the selected formal node identification address set in a source address field,
the communication method further including, at the start-point communication device,:
h) transmitting the trigger packet;
i) receiving the return packet transmitted from the target communication device in response to the trigger packet; and
j) acquiring node description data corresponding to a formal node identification address contained in the received return packet, from a storage unit that stores node description data not having a name resolving function and serving as a description character string of the target communication device or serving as information on link to a description of the target communication device.

10. The communication method according to claim 8, wherein the step b) includes switching the source address to select between the IP address set in the communication device and the formal node identification address based on whether the determined communication purpose is the predetermined purpose or not.

11. The communication method according to claim 8 or 10, wherein the step a) determines that the communication purpose of the packet to be transmitted is only to notify a communication destination of predetermined information and determines whether or not the source address included in the packet is not used as a destination address in the series of communications thereafter by a communication device serving as the communication destination.

## Patentansprüche

1. Kommunikationsvorrichtung (100) mit einer darin festgelegten Internetprotokoll-, IP-, Adresse, die aufweist:
eine Zweckbestimmungseinheit (120), die bestimmt, ob ein Paket, das übertragen werden soll, ein Paket für eine allgemeine interaktive Kommunikation oder ein Paket für eine Ein-Richtungskommunikation ist;
eine Quelladressenauswahleinheit (130), die in einem Fall, in dem die Zweckbestimmungseinheit bestimmt, dass das Paket, das übertragen werden soll, ein Paket für eine Ein-Richtungskommunikation ist, als eine Quelladresse eine formale Knotenkennungsadresse auswählt, die getrennt von der IP-Adresse bereitgestellt wird, um die Kommunikationsvorrichtung zu identifizieren, wobei die formale Knotenkennungsadresse keine Funktion, in der sie in der Kommunikationsvorrichtung festgelegt wird, um eine IP-Kommunikation zu erreichen, oder keine Funktion hat, in der sie als eine Zieladresse des Pakets, das an die Kommunikationsvorrichtung übertragen werden soll, festgelegt wird, um dafür zu sorgen, dass die Kommunikationsvorrichtung das Paket korrekt empfängt; und
eine Übertragungseinheit (140), die ein Paket überträgt, das die formale Knotenkennungsadresse, die von der Quelladressenauswahleinheit ausgewählt wird, als die Quelladresse darin festgelegt hat.

2. Kommunikationsvorrichtung nach Anspruch 1, wobei
die formale Knotenkennungsadresse in einer anderen Vorrichtung gespeichert ist, die verschieden von der Kommunikationsvorrichtung ist, und
die Quelladressenauswahleinheit die formale Knotenkennungsadresse von der anderen Vorrichtung erlangt.

3. Kommunikationssystem, das mehrere Kommunikationsvorrichtungen (100, 200, 300) umfasst, die jeweils eine Internetprotokoll-, IP-, Adresse darin festgelegt haben, wobei die mehreren Kommunikationsvorrichtungen die Kommunikationsvorrichtung nach Anspruch 1 oder 2 als Zielkommunikationsvorrichtung (100) umfassen, wobei die Zielkommunikationsvorrichtung (300) ferner aufweist:
eine Empfangseinheit (110), die ein Auslöserpaket empfängt (S51), das von einer Startpunktkommunikationsvorrichtung (200) der mehreren Kommunikationsvorrichtungen übertragen wird; wobei
die Zweckbestimmungseinheit (120) bestimmt, ob ansprechend auf das Auslöserpaket, das von der Empfangseinheit empfangen wird, ein Rückpaket übertragen wird;
die Quelladressenauswahleinheit in einem Fall, in dem die Zweckbestimmungseinheit (120) bestimmt, dass das Paket, das übertragen werden soll, ein Paket für eine Ein-Richtungskommunikation ist, als die Quelladresse die formale Knotenkennungsadresse auswählt, die getrennt von einer IP-Adresse bereitgestellt wird, die in der Zielkommunikationsvorrichtung festgelegt ist, um die Zielkommunikationsvorrichtung zu identifizieren; und
die Übertragungseinheit das Rückpaket, in dem die formale Knotenkennungsadresse, die von der Quelladressenauswahleinheit ausgewählt wird, in einem Quelladressfeld festgelegt ist, an die Startpunktkommunikationsvorrichtung überträgt (S55), und
die Startpunktkommunikationsvorrichtung aufweist:
eine Übertragungseinheit (210), die das Auslöserpaket überträgt;
eine Empfangseinheit (220), die das Rückpaket empfängt, das von der Zielkommunikationsvorrichtung ansprechend auf das Auslöserpaket übertragen wird; und
eine Knotenbeschreibungsdaten-Erlangungseinheit (240), die Knotenbeschreibungsdaten, die der formalen Knotenkennungsadresse entsprechen, die in dem Rückpaket enthalten ist, das von der Empfangseinheit der Startpunktkommunikationsvorrichtung empfangen wird, aus einer Speichereinheit erlangt, die Knotenbeschreibungsdaten speichert, die keine Namensauflösungsfunktion haben und als eine Beschreibungszeichenkette der Zielkommunikationsvorrichtung dienen oder als Information über einen Verweis auf eine Beschreibung der Zielkommunikationsvorrichtung dienen.

4. Kommunikationssystem nach Anspruch 3, wobei
die Quelladressenauswahleinheit in dem Fall, in dem die Zweckbestimmungseinheit bestimmt, dass das Paket, das übertragen werden soll, ein Paket für die Ein-Richtungskommunikation ist, die formale Knotenkennungsadresse von einer anderen Vorrichtung als der Zielkommunikationsvorrichtung erlangt und die erlangte formale Knotenkennungsadresse als die Quelladresse auswählt.

5. Kommunikationssystem nach Anspruch 3, wobei
die Speichereinheit in der Startkommunikationsvorrichtung oder einer anderen Vorrichtung als der Startkommunikationsvorrichtung bereitgestellt ist.

6. Kommunikationsvorrichtung nach Anspruch 1 oder 2, wobei
die Quelladressenauswahleinheit die Quelladresse wechselt, um basierend darauf, ob die Zweckbestimmungseinheit bestimmt, dass das Paket, das übertragen werden soll, ein Paket für eine Ein-Richtungskommunikation ist oder nicht, zwischen der IP-Adresse, die in der Kommunikationsvorrichtung festgelegt ist, und der formalen Knotenkennungsadresse zu wählen.

7. Kommunikationsvorrichtung nach Anspruch 1, 2 oder 6, wobei
die Zweckbestimmungseinheit bestimmt, ob das Paket, das übertragen werden soll, nur dazu dient, ein Kommunikationsziel über vorgegebene Informationen zu benachrichtigen, und bestimmt, ob die in dem Paket enthaltene Quelladresse in der Folge von Kommunikationen danach nicht durch eine Kommunikationsvorrichtung, die als das Kommunikationsziel dient, als eine Zieladresse verwendet wird oder nicht.

8. Kommunikationsverfahren, das von einer Kommunikationsvorrichtung mit einer darin festgelegten Internetprotokoll-, IP-, Adresse durchgeführt wird, wobei das Verfahren die folgenden Schritte umfasst:
a) Bestimmen (S52), ob ein Paket, das übertragen werden soll, ein Paket für eine allgemeine interaktive Kommunikation oder ein Paket für eine Ein-Richtungskommunikation ist;
b) in einem Fall, in dem in Schritt a) bestimmt wird, dass das Paket, das übertragen werden soll, ein Paket für eine Ein-Richtungskommunikation ist, Auswählen (S53) als eine Quelladresse einer formalen Knotenkennungsadresse, die getrennt von der IP-Adresse bereitgestellt wird, um die Kommunikationsvorrichtung zu identifizieren, wobei die formale Knotenkennungsadresse keine Funktion, in der sie in der Kommunikationsvorrichtung festgelegt wird, um eine IP-Kommunikation zu erreichen, oder keine Funktion hat, in der sie als eine Zieladresse des Pakets, das an die Kommunikationsvorrichtung übertragen werden soll, festgelegt wird, um dafür zu sorgen, dass die Kommunikationsvorrichtung das Paket korrekt empfängt; und
c) Übertragen eine (S55) eines Pakets, das die formale Knotenkennungsadresse, die von der Quelladressenauswahleinheit ausgewählt wird, als die Quelladresse darin festgelegt hat.

9. Kommunikationsverfahren, das von mehreren Kommunikationsvorrichtungen, die jeweils eine Internetprotokoll-, IP-, Adresse darin festgelegt haben, durchgeführt wird, wobei eine der mehreren Kommunikationsvorrichtungen eine Zielkommunikationsvorrichtung ist, wobei das Kommunikationsverfahren die Schritte a), b) und c) von Anspruch 8 umfasst, die durch die Zielkommunikationsvorrichtung durchgeführt werden, wobei das Kommunikationsverfahren die folgenden Schritte aufweist:
d) Empfangen eines Auslöserpakets, das von einer Startpunktkommunikationsvorrichtung der mehreren Kommunikationsvorrichtungen übertragen wird, an der Zielkommunikationsvorrichtung, wobei
e) wobei der Schritt a) ansprechend auf das empfangene Auslöserpaket bestimmt, ob ein Rückpaket übertragen wird;
f) wobei der Schritt b) in einem Fall, in dem das bestimmte Paket, das übertragen werden soll, ein Paket für die Ein-Richtungskommunikation ist, als eine Quelladresse die formale Knotenkennungsadresse, die getrennt von einer in der Zielkommunikationsvorrichtung festgelegten IP-Adresse bereitgestellt wird, auswählt, um die Kommunikationsvorrichtung zu identifizieren; und
g) wobei der Schritt c) das Rückpaket, das die ausgewählte formale Knotenkennungsadresse in einem Quelladressfeld festgelegt hat, an die Startpunktkommunikationsvorrichtung überträgt,
wobei das Kommunikationsverfahren ferner an der Startpunktkommunikationsvorrichtung umfasst:
h) Übertragen des Auslöserpakets;
i) Empfangen des Rückpakets, das von der Zielkommunikationsvorrichtung ansprechend auf das Auslöserpaket übertragen wird; und
j) Erlangen von Knotenbeschreibungsdaten, die einer formalen Knotenkennungsadresse entsprechen, die in dem empfangenen Rückpaket enthalten ist, aus einer Speichereinheit, die Knotenbeschreibungsdaten speichert, die keine Namensauflösungsfunktion haben und als eine Beschreibungszeichenkette der Zielkommunikationsvorrichtung dienen oder als Information über einen Verweis auf eine Beschreibung der Zielkommunikationsvorrichtung dienen.

10. Kommunikationsverfahren nach Anspruch 8, wobei
der Schritt b) das Wechseln der Quelladresse umfasst, um basierend darauf, ob der bestimmte Kommunikationszweck der vorgegebene Zweck ist oder nicht, zwischen der IP-Adresse, die in der Kommunikationsvorrichtung festgelegt ist, und der formalen Knotenkennungsadresse zu wählen.

11. Kommunikationsverfahren nach Anspruch 8 oder 10, wobei
der Schritt a) bestimmt, dass der Kommunikationszweck des Pakets, das übertragen werden soll, nur dazu dient, ein Kommunikationsziel über vorgegebene Informationen zu benachrichtigen, und bestimmt, ob die in dem Paket enthaltene Quelladresse in der Folge von Kommunikationen danach nicht durch eine Kommunikationsvorrichtung, die als das Kommunikationsziel dient, als eine Zieladresse verwendet wird oder nicht.

## Revendications

1. Dispositif de communication (100) renfermant une adresse de protocole Internet, IP, établie comprenant :
une unité de détermination d'objectif (120) qui détermine si un paquet à transmettre est un paquet pour une communication interactive générale ou un paquet pour une communication unidirectionnelle ;
une unité de sélection d'adresse source (130) qui, dans un cas où l'unité de détermination d'objectif détermine que le paquet à transmettre est un paquet pour une communication unidirectionnelle, sélectionne, en tant qu'adresse source, une adresse d'identification de nœud formelle fournie séparément de l'adresse IP afin d'identifier le dispositif de communication, l'adresse d'identification de nœud formelle n'ayant pas pour fonction d'être établie dans le dispositif de communication pour parvenir à une communication IP ni pour fonction d'être établie en tant qu'adresse de destination du paquet à transmettre au dispositif de communication de façon à amener le dispositif de communication à recevoir correctement le paquet ; et
une unité de transmission (140) qui transmet un paquet renfermant l'adresse d'identification de nœud formelle sélectionnée par l'unité de sélection d'adresse source établie en tant qu'adresse source.

2. Dispositif de communication selon la revendication 1, dans lequel
l'adresse d'identification de nœud formelle est stockée dans un autre dispositif différent du dispositif de communication, et
l'unité de sélection d'adresse source acquiert l'adresse d'identification de nœud formelle auprès dudit autre dispositif.

3. Système de communication comportant une pluralité de dispositifs de communication (100, 200, 300), renfermant chacun une adresse de protocole Internet, IP, établie, la pluralité de dispositifs de communication comportant le dispositif de communication selon la revendication 1 ou 2 en tant que dispositif de communication cible (100), le dispositif de communication cible (300) comprenant en outre :
une unité de réception (110) qui reçoit un paquet de déclenchement (S51) transmis depuis un dispositif de communication de point de départ (200) de la pluralité de dispositifs de communication ; dans lequel
l'unité de détermination d'objectif (120) détermine si un paquet de retour est transmis en réponse au paquet de déclenchement reçu par l'unité de réception ;
dans un cas où l'unité de détermination d'objectif (120) détermine que le paquet à transmettre est un paquet pour une communication unidirectionnelle, l'unité de sélection d'adresse source sélectionne, en tant qu'adresse source, l'adresse d'identification de nœud formelle fournie séparément d'une adresse IP établie dans le dispositif de communication cible afin d'identifier le dispositif de communication cible ; et
l'unité de transmission transmet (S55) au dispositif de communication de point de départ, le paquet de retour dans lequel l'adresse d'identification de nœud formelle sélectionnée par l'unité de sélection d'adresse source est établie dans un champ d'adresse source, et
le dispositif de communication de point de départ comprenant :
une unité de transmission (210) qui transmet le paquet de déclenchement ;
une unité de réception (220) qui reçoit le paquet de retour transmis depuis le dispositif de communication cible en réponse au paquet de déclenchement ; et
une unité d'acquisition de données de description de nœud (240) qui acquiert des données de description de nœud correspondant à l'adresse d'identification de nœud formelle contenue dans le paquet de retour reçu par l'unité de réception du dispositif de communication de point de départ, en provenance d'une unité de stockage qui stocke des données de description de nœud n'ayant pas de fonction de résolution de nom et servant de chaîne de caractères de description du dispositif de communication cible ou servant d'informations sur un lien vers une description du dispositif de communication cible.

4. Système de communication selon la revendication 3, dans lequel
dans le cas où l'unité de détermination d'objectif détermine que le paquet à transmettre est un paquet pour une communication unidirectionnelle, l'unité de sélection d'adresse source acquiert l'adresse d'identification de nœud formelle auprès d'un autre dispositif autre que le dispositif de communication cible, et sélectionne l'adresse d'identification de nœud formelle acquise en tant qu'adresse source.

5. Dispositif de communication selon la revendication 3, dans lequel
l'unité de stockage est fournie dans le dispositif de communication de point de départ, ou un autre dispositif autre que le dispositif de communication de point de départ.

6. Dispositif de communication selon la revendication 1 ou 2, dans lequel
l'unité de sélection d'adresse source permute l'adresse source pour faire une sélection entre l'adresse IP établie dans le dispositif de communication et l'adresse d'identification de nœud formelle selon que l'unité de détermination d'objectif détermine que le paquet à transmettre est un paquet pour une communication unidirectionnelle ou non.

7. Dispositif de communication selon la revendication 1, 2 ou 6, dans lequel
l'unité de détermination d'objectif détermine si le paquet à transmettre sert uniquement à notifier une destination de communication d'informations prédéterminées et détermine si l'adresse source comprise dans le paquet n'est pas utilisée en tant qu'adresse de destination dans la série de communications ensuite par un dispositif de communication servant de destination de communication.

8. Procédé de communication réalisé par un dispositif de communication renfermant une adresse de protocole Internet, IP, établie, le procédé comportant les étapes suivantes :
a) le fait de déterminer (S52) si un paquet à transmettre est un paquet pour une communication interactive générale ou un paquet pour une communication unidirectionnelle ;
b) dans un cas où à l'étape a) le paquet à transmettre déterminé est un paquet pour une communication unidirectionnelle, la sélection (S53), en tant qu'adresse source, d'une adresse d'identification de nœud formelle fournie séparément de l'adresse IP afin d'identifier le dispositif de communication, l'adresse d'identification de nœud formelle n'ayant pas pour fonction d'être établie dans le dispositif de communication pour parvenir à une communication IP ni pour fonction d'être établie en tant qu'adresse de destination du paquet à transmettre au dispositif de communication de façon à amener le dispositif de communication à recevoir correctement le paquet ; et
c) la transmission (S55) d'un paquet ayant l'adresse d'identification de nœud formelle sélectionnée établie en tant qu'adresse source.

9. Procédé de communication réalisé par une pluralité de dispositifs de communication renfermant chacun une adresse de protocole Internet, IP, établie, l'un de la pluralité de dispositifs de communication étant un dispositif de communication cible, le procédé de communication comportant les étapes a), b) et c) de la revendication 8 réalisées par le dispositif de communication cible, le procédé de communication comprenant en outre les étapes suivantes :
d) la réception, au niveau du dispositif de communication cible, d'un paquet de déclenchement transmis depuis un dispositif de communication de point de départ de la pluralité de dispositifs de communication,
dans lequel
e) l'étape a) détermine si un paquet de retour est transmis en réponse au paquet de déclenchement reçu ;
f) dans un cas où le paquet à transmettre déterminé est un paquet pour une communication unidirectionnelle, l'étape b) sélectionne, en tant qu'adresse source, l'adresse d'identification de nœud formelle fournie séparément d'une adresse IP établie dans le dispositif de communication cible afin d'identifier le dispositif de communication cible ; et
g) l'étape c) transmet, au dispositif de communication de point de départ, le paquet de retour ayant l'adresse d'identification de nœud formelle sélectionnée établie dans un champ d'adresse source,
le procédé de communication comportant en outre, au niveau du dispositif de communication de point de départ :
h) la transmission du paquet de déclenchement ;
i) la réception du paquet de retour transmis depuis le dispositif de communication cible en réponse au paquet de déclenchement ; et
j) l'acquisition de données de description de nœud correspondant à une adresse d'identification de nœud formelle contenue dans le paquet de retour reçu, auprès d'une unité de stockage qui stocke des données de description de nœud n'ayant pas de fonction de résolution de nom et servant de chaîne de caractères de description du dispositif de communication cible ou servant d'informations sur un lien vers une description du dispositif de communication cible.

10. Procédé de communication selon la revendication 8, dans lequel
l'étape b) comporte la permutation de l'adresse source pour faire une sélection entre l'adresse IP établie dans le dispositif de communication et l'adresse d'identification de nœud formelle selon que l'objectif de communication déterminé est l'objectif prédéterminé ou non.

11. Procédé de communication selon la revendication 8 ou 10, dans lequel
l'étape a) détermine que l'objectif de communication du paquet à transmettre est uniquement de notifier une destination de communication d'informations prédéterminées et détermine si l'adresse source comprise dans le paquet n'est pas utilisée en tant qu'adresse de destination dans la série de communications ensuite par un dispositif de communication servant de destination de communication.
